(19)

**Europäisches Patentamt**

**European Patent Office**

**Office européen des brevets**

(11) **EP 4 418 406 A2**

(12) **EUROPEAN PATENT APPLICATION**

(43) Date of publication:
**21.08.2024 Bulletin 2024/34**

(21) Application number: **24152510.4**

(22) Date of filing: **18.01.2024**

(51) International Patent Classification (IPC):
*H01M 10/48* (2006.01)  *A62C 3/00* (2006.01)
*H01M 10/613* (2014.01)  *H01M 10/643* (2014.01)
*H01M 50/213* (2021.01)  *H01M 50/383* (2021.01)

(52) Cooperative Patent Classification (CPC):
**H01M 10/48; A62C 3/00; H01M 10/482;**
**H01M 10/486; H01M 10/613; H01M 10/643;**
**H01M 50/213; H01M 50/383;** H01M 2200/10;
H01M 2220/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **17.02.2023 GB 202302257**

(71) Applicant: **Rolls-Royce plc**
**London N1 9FX (GB)**

(72) Inventor: **Dobson, Matthew**
**Derby, DE24 8BJ (GB)**

(74) Representative: **Rolls-Royce plc**
**Moor Lane (ML-9)**
**PO Box 31**
**Derby DE24 8BJ (GB)**

(54) **PREVENTING PROPAGATION OF CELL FAILURES IN BATTERY PACKS**

(57) Battery packs 100, which may be used in vehicles 10, 20, are provided. One such battery pack 100 comprises: a plurality of battery cells 101; one or more flow control devices 140; and sensing and control circuitry 150 configured to: measure one or more parameters indicative of an onset of thermal runaway of one or more of the plurality of cells 101; determine, based on a change in one or more of the measured parameters, that one or more of the plurality of battery cells 101 has begun or is at risk of beginning thermal runaway; and activate one or more of the flow control devices 140 in response to the determination. Each of the one more flow control devices 140 is configured to, when activated, direct a flow of fluid 145 past one or more of the plurality of cells 101 to cool the cells 101 and/or carry media 130 vented by one or more of the cells 101 following a thermal runaway event away from the one or more cells 101.

EP 4 418 406 A2

*FIG. 5A*

## Description

## TECHNICAL FIELD

The present disclosure relates to battery packs, particularly but not exclusively for use in the power and propulsion systems of aircraft.

## BACKGROUND

Interest in aircraft with electric, hybrid electric and 'more electric' propulsion systems is increasing because of the need to reduce carbon emissions and pollution, and because of developments in the facilitating electrical technologies. Hybrid electric propulsion systems include engines, for example gas turbine or diesel engines, energy storage, typically in the form of batteries, and/or fuel cells. Purely electric propulsion systems completely dispense with engines and use only batteries and, in some cases, fuel cells as an energy source for their propulsors. So-called 'more electric' aircraft may also include energy storage to provide additional functionality (e.g., electric starting without the use of ground equipment) and to improve the efficiency and operability of their engines. The batteries used in these applications take the form of battery packs that include large numbers of battery cells, for example lithium-ion cells, electrically connected in series and parallel to meet the charge capacity and power requirements of the application.

It is known that a battery cell may enter a state known as thermal runaway. In this state, a chain reaction within the cell causes the internal temperature and pressure to build until, unless mitigated, the cell fails. Some cell types, including some cylindrical cells, include a venting arrangement that is designed to open in the event of the onset thermal runaway. The vent allows the release of heat, gas, and fire from the cell, in a controlled manner, to prevent the internal pressure and temperature building to the point of explosion. Another cell failure phenomenon, which is considered a type of thermal runaway, is known as side wall rupture (SWR). This is where the cell pressure vessel (e.g., the can of a cylindrical cell) fails arbitrarily and bursts open, releasing gas, heat, and fire from a location other than the vent (if present). It is possible for the thermal runaway (e.g., SWR) of one battery cell to propagate and initiate failure events in neighbouring cells of a battery pack. In a worst-case-scenario, the failure of a single cell or a small group of cells results in the total destruction of a battery pack, accompanied by the release of a large amount of energy (e.g., a fire or explosion).

Battery cells may enter thermal runaway as a result of a detectable defect or because they are subject to abuse conditions (e.g., operation with physical, electrical, or thermal conditions outside of their design window). It is, however, also possible for a cell to experience a failure due an undetectable defect such as may result from the inherent variability that exists in the cell manufacturing process.

In the automotive industry, for example, for product safety and certification assessment, battery cells are generally assumed to be safe (e.g., will not enter thermal runaway) unless they have a detectable defect or are subject to abuse conditions. Thus, automotive design and manufacturing processes may focus on detecting faulty cells and on preventing operation outside of the design window of the cells.

In aerospace, however, the potential consequence of a propagating thermal runaway may be much more severe. The present disclosure is concerned with preventing, or at least reducing the likelihood of, the propagation of cell failure events such as thermal runaway, while also taking into account the sensitivity of aerospace applications to weight and power density.

## SUMMARY

The scope of protection is defined by the appended claims.

According to a first aspect, there is provided a battery pack. The battery pack comprises: a plurality of battery cells; one or more flow control devices; and sensing and control circuitry. The sensing and control circuity is configured to: measure one or more parameters indicative of an onset of thermal runaway of one or more of the plurality of cells; determine, based on a change in one or more of the measured parameters, that one or more of the plurality of battery cells has begun or is at risk of beginning thermal runaway; and activate one or more of the flow control devices in response to the determination. Each of the one more flow control devices is configured to, when activated, direct a flow of fluid past one or more of the plurality of cells to cool the cells and/or carry media vented by one or more of the cells following a thermal runaway event away from the one or more cells.

The risk of a cell failure event starting and/or propagating from one cell to another may be significantly reduced if the temperature in and around the cells can be brought down, and if the build-up of combustible gasses around the cells can be prevented. By detecting failure events at early stage and responding by directing a flow of fluid past the cells, development and propagation of the events may be limited or prevented. Only directing the flow of fluid when an event is detected, rather than at all times, limits the reduction in efficiency that may occur when directing the flow.

The flow of fluid may be a flow of a flame retardant fluid. For example, the fluid may include water or another flame retardant liquid, an inert gas such as argon, or a flame retardant gas containing bromine, chlorine, phosphorous, nitrogen or boron, for example. Using a flame retardant fluid may reduce the risk of fire and explosion.

One or more of the flow control devices may be active flow control devices configured to generate a flow of fluid. Examples of active devices include fans or blowers. Additionally or alternatively to the active flow control devices, one or more of the flow control devices may be passive flow control devices configured, when activated, to direct an existing flow of fluid past the one or more cells. Examples of passive flow control devices include ports or holes which in an open position allow the passage of a fluid. For example, a flow of air resulting from the relative motion of a vehicle (e.g., an aircraft's movement through the air) may be directed past the cells by opening a port or hole.

The battery pack may comprise a plurality of the flow control devices. Each respective one of the plurality of flow control devices may be selectively activatable by the sensing and control circuitry and may be configured to direct a flow of fluid past a respective one or more groups of battery cells. Each of the one or more groups of battery cells may include one or more of the plurality of battery cells. Reducing the number of cells per flow control devices may allow a more targeted approach to reducing the risk cell of cell failure and propagation.

The sensing circuitry may include a temperature sensor configured to measure a temperature within the battery pack, and the control circuitry may determine that one or more cells has begun or is at risk of beginning thermal runaway based on an increase in temperature (e.g., above a temperature threshold or above a threshold rate of temperature increase). Additionally or alternatively, the sensing circuitry may include a pressure sensor configured to measure a pressure within the battery pack, and the control circuitry may determine that one or more cells has begun or is at risk of beginning thermal runaway based on an increase in pressure (e.g., above a pack pressure threshold or above a threshold rate of pressure increase). Additionally or alternatively, the sensing circuitry may include or a current or voltage sensor configured to measure a current or voltage produced by the plurality of battery cells, and the control circuitry may determine that one or more cells has begun or is at risk of beginning thermal runaway based on a change in current or voltage (e.g., a drop in pack voltage). In some embodiments, the battery pack may include a sensor (e.g., a temperature sensor) for each cell of the pack or for each group of cells of the pack, each group including a small number of cells (e.g., five or fewer cells, four cells, three cells or two cells).

The control circuitry may be, or form part of, a battery management system (BMS), or may belong to a control system of a wider electrical power system (e.g., an electrical power system of an aircraft that includes the battery pack and also includes electrical loads such as motors). The control circuitry may take the form of one or more processors, microcontrollers, Field-Programmable Gate Arrays (FGPAs), Programmable Logic Devices (PLDs) or any other suitable control arrangement.

The cells may be of any type and form factor, including cylindrical cells, pouch cells and prismatic cells. In some embodiments the cells are cylindrical cells (e.g.,

4680, 4690, 18650, 21700 or 26650 cylindrical cells). Compared with pouch cells and prismatic cells, cylindrical cells may represent a smaller fraction of the, e.g., charge capacity and voltage of the battery pack. This reduces the drop in charge capacity and voltage following the failure of one cell, which may be of particular benefit in aircraft applications.

In some embodiments, each battery cell extends in a z-direction, and the plurality of battery cells are arranged in an array in an x-y plane perpendicular to the z-direction. The battery pack may further comprise a plurality of barriers for preventing propagation of thermal runaway between cells of the array. Each barrier may form a barrier wall that extends in the z-direction. A gap may be defined between the barrier wall of each respective battier and outer cell walls. Each of the one or more flow control devices may be configured to direct a flow of fluid in the z-direction through one or more of the gaps. Thus, anti-propagation barriers that reduce the likelihood of cell failure events from propagating to neighbouring cells also define channels, in the form of the gaps, that help direct flow of fluid. This may, for example, improve the rate of heat transfer from the cells to the flow of fluid and help ensure vented media are carried away from the cells.

At least one of the plurality of barriers may further include a flow guide feature configured to guide a direction of the flow of fluid and/or a flow of media vented by one or more of the cells following a thermal runaway event. For example, a barrier wall may carry a vane, a fin, a rib or a profiled wall or edge that directs the flow in a predefined direction. In this way, heat and vented media can be directed away from regions of the pack which may be vulnerable to failure propagation (e.g., a core or central region of the pack). In some embodiments, a plurality of the barriers (e.g., all of the barriers) may include a flow guide feature.

A ratio equal to a thickness of the barrier walls, measured in the x-y direction, divided by a radius of each of the cylindrical cells may less than or equal to 0.35. The ratio may be less than or equal to 0.25, less than or equal to 0.20, less than or equal to 0.15, less than or equal to 0.10, or even less than or equal to 0.08. The ratio may be greater than or equal to 0.02. The thickness, measured in the x-y direction, of the barrier walls may be less than or equal 3 mm, less than or equal to 2 mm, or even less than or equal to 1 mm. In one example, the thickness of the barrier walls is in the range 0.3 mm to 1.2 mm. The use of a thin barrier wall limits the additional weight associated with the barriers and allows the cells to be closer together, both of which increase the power density of the battery pack.

The barrier walls may include a composite material, a thermoplastic material and/or a thermoset plastic material. For example, the barrier walls may include a glass-fibre reinforced plastic (GFRP), a carbon-fibre reinforced polymer (CFP), or Kevlar or another aramid.

Where the barrier walls include a composite material, the walls may consist of five or fewer layers of composite material. In some embodiments, there are two, three or four layers of the composite material. The cumulated mass of the barriers of the battery pack may be significantly affected by the number of composite layers, especially where there is one barrier per cell. It has been found that two, three or four layers provides a particularly good combination of low mass and failure propagation protection. In a specific example, there are two layers of composite material.

The barriers may be separate from the carrier structure and replaceable. For example, the barriers may be separate from but connectable, directly or indirectly, to the carrier structure. In this way, a barrier that is damaged while containing a thermal event may be replaced without the destruction or replacement of other parts of the battery pack.

In some embodiments, the battery cells are cylindrical battery cells, each cell having a cylindrical outer cell wall that extends in the z-direction between opposed first and second ends. In this case, each one of the plurality of barriers may form a barrier wall that surrounds a group of one or more of the cells. A gap may be defined between the barrier wall of each respective barrier and the outer cell all of each of the respective one or more cylindrical cells enclosed by the respective barrier. The barrier wall of each respective barrier may be spaced apart from the outer cell wall of each of the respective one or more cells it encloses so that each respective gap extends about an entire circumference of the respective cell.

A radius of each cylindrical cell, measured in the x-y plane, is equal to $R_{Cell}$. A size of the gap, measured in the x-y plane, is equal to $W_{Gap}$. A ratio of $W_{Gap}$ and $R_{Cell}$ may satisfy:

$$0.02 \leq \frac{W_{Gap}}{R_{Cell}} \leq 0.20.$$

In a group of embodiments in which the barrier wall of each barrier surrounds one of the cells, $W_{Gap}$ is defined as an average perpendicular distance, measured in the x-y plane, between the outer cell wall and the barrier wall. The perpendicular distance between the outer cell wall and the barrier wall is the length of the line drawn between the outer cell wall and the barrier wall that is perpendicular to the circumference of the circular outer cell wall (equivalently, the line passes through the central axis of the cylindrical cell).

In another group of embodiments in which the barrier wall of each barrier surrounds more than one of the cells, $W_{Gap}$ is defined as a distance of closest approach between the barrier wall and an outer wall of a cell enclosed by the barrier wall, measured in the x-y plane. In other words, $W_{Gap}$ can be defined as the smallest perpendicular distance between the cylindrical outer wall of an enclosed cell and the barrier wall.

Where anti-propagation barriers are included, the inclusion of a gap between the outer cell wall and the barrier wall, and the dimensioning of the gap, has been found to be of surprising importance. To maximize the power density of a battery pack, it may be desirable to reduce the distance between adjacent cells, and thus the size of the gap, as much as possible. It has, however, been found that if no gap or a very small gap is used, the barrier wall effectively acts as additional wall thickness of the cell pressure vessel (e.g., can). This restricts the expansion of the pressure vessel, which may delay the onset of SWR and have the undesirable effect of increasing the pressure, energy and thus destructiveness of the burst. Conversely, it has been found that increasing the size of the gap can result in a surprising increase in the destructiveness of a thermal event. It is believed this may be because the increase in gap size increases the volume of combustible air in the region surrounding the cell where, e.g., heat and combustible vented media may accumulate. Sizing the gap to be between 0.02 and 0.20 times the radius of the cylindrical cell may provide a surprisingly large reduction in the likelihood of a thermal event propagating beyond the barrier wall. A gap sized to be between 0.03 and 0.15 times the radius of the cylindrical cell may provide a particularly good combination of power density and protection against failure propagation. In a specific embodiment, the gap is sized between 0.04 and 0.12 times the radius of the cylindrical cell.

As noted above, the thickness, measured in the x-y direction, of the barrier walls may be less than or equal 3 mm, less than or equal to 2 mm, or even less than or equal to 1 mm. Dimensioning the gap to be in the range 0.02 to 0.20 times the radius of the cell, and thus reducing the likelihood of failure propagation, may allow a particularly thin wall to be used.

The barrier wall of each one of the plurality of barriers may surround a group of one, two or three cells. Limiting the number of cells in a group to at most three limits the total energy within a group of cells and increases the likelihood that a thin barrier wall can contain the failure event.

In one embodiment, the barrier wall of each one of the plurality of barriers is a tubular barrier wall surrounding one of the cylindrical cells. A cylindrical shaped wall (i.e., a tubular wall with a circular cross-section) has been found to have a particularly high pressure capability which, combined with the inclusion of only one cell within the barrier wall, provides a high level of protection against failure propagation.

In another embodiment, the barrier wall of each one of the plurality of barriers surrounds two cylindrical cells. Surrounding two cells may provide a particularly good combination of protection against failure propagation, low mass and ease of pack assembly.

The barrier wall of each one of the plurality of barriers may have a tessellating cross-section (e.g., a hexagonal cross-section). In this way, adjacent barrier walls may fit together without gaps between adjacent barrier walls. This may effectively provide additional barrier wall thickness, as adjacent barrier walls are contiguous. Further, the elimination of gaps may allow cells to be closer together, increasing power density. It may also limit a localized temperature rise following a thermal event because heat may more easily be dissipated by thermal conduction between barrier walls.

The barrier wall of each one of the plurality of barriers may surround two or more cylindrical cells and include a gap. By including the one or more gaps, the barrier wall may form a first wall portion surround a first cell of the two or mor cells and a second wall portion surrounding a second cell of the two or more cells. According to this approach, the total number of barriers required for the pack may be reduced without a significant reduction in anti-propagation performance.

The battery cells may be of any suitable chemistry. In an embodiment, the cells are lithium-ion cells. Other examples include but are not limited to secondary lithium-ion, lithium metal, lithium solid state, sulphur (Li-S), Sodium-ion, and sodium-sulphur.

The battery pack may be a battery pack for a vehicle. The vehicle may be an aircraft or another type of vehicle (e.g., a car, truck or train). The vehicle may be a purely electric vehicle or a hybrid electric vehicle. In other examples, the vehicle is a 'more electric' aircraft. In still other embodiments, the battery pack could be used in a non-vehicle applications including but not limited to consumer goods and industrial applications.

According to a second aspect, there is provided an aircraft propulsion system comprising the battery pack of any one of the preceding claims. The propulsion system may be a purely electric propulsion system, a hybrid electric propulsion system, or the propulsion system of a more electric aircraft.

According to a third aspect, there is provided an aircraft comprising the battery pack of the first aspect, or the aircraft propulsion system of the second aspect.

The skilled person will appreciate that except where mutually exclusive, a feature described in relation to any one of the above aspects may be applied mutatis mutandis to any other aspect. Further, except where mutually exclusive, any feature described herein may be applied to any aspect and/or combined with any other feature described herein.

**BRIEF DESCRIPTION OF THE DRAWINGS**

Embodiments will now be described by way of example only with reference to the accompanying drawings, which are purely schematic and not to scale, and in which:

Figure 1A is a perspective view of a conventional take-off and landing (CTOL) aircraft that includes an energy storage system including a battery pack;
Figure 1B is a perspective view of a vertical take-off and landing (VTOL) aircraft that includes an energy storage system including a battery pack;
Figure 2A is a schematic illustration of a propulsion system of an electric aircraft;
Figure 2B is a schematic illustration of a propulsion system of a hybrid electric aircraft;
Figure 3A is a perspective view of a battery pack for an aircraft;
Figure 3B shows a single cylindrical battery cell;
Figure 3C shows perspective views of top and bottom cell carrier structures for locating the cells of a battery pack;
Figure 4 illustrates a battery pack in which one or more activatable flow control devices direct a flow of fluid past cells in response to a cell failure event;
Figure 5A shows an embodiment in which cells of the battery pack are surrounded by a thermal runaway anti-propagation barrier;
Figure 5B is a top-down view of the portion of the battery pack of Figure 5A;
Figure 6 is a top-down view of a portion of a battery pack, showing another embodiment of a thermal runaway anti-propagation barrier that surrounds a group of two cells;
Figure 7 is a top-down view of a portion of a battery pack, showing another embodiment of a thermal runaway anti-propagation barrier that has a hexagonal cross-section;
Figures 8 is a top-down view of a portion of a battery pack, showing another embodiment of a thermal runaway anti-propagation barrier that surrounds a group of two cells and includes gaps in the wall; and
Figure 9 is a top-down view of a portion of a battery pack, showing another embodiment of a thermal runaway anti-propagation barrier that surrounds a single cell and in which the outer wall of the cell contacts the barrier wall at a point.

**Detailed Description**

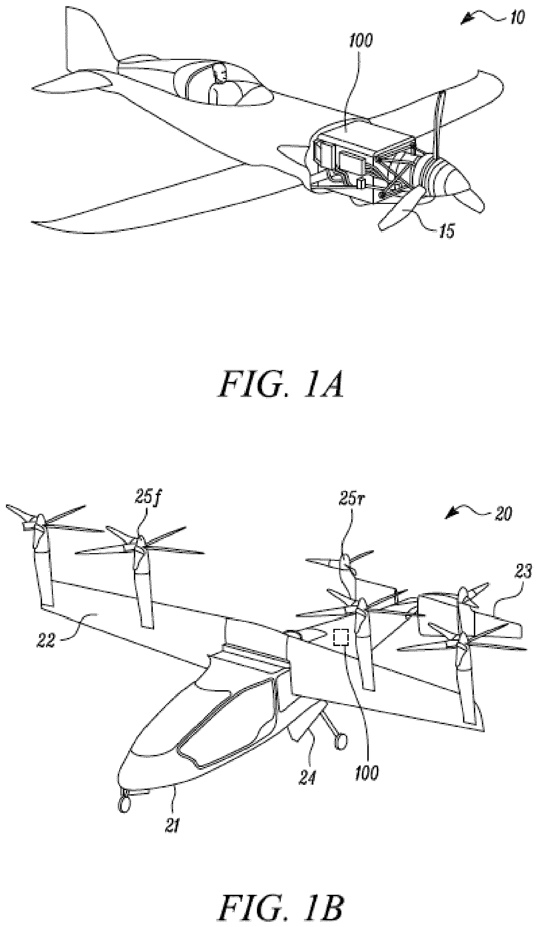

**Figure 1A** illustrates a conventional take-off and landing (CTOL) aircraft 10 with a purely electric propulsion system. The front portion of the aircraft 10 is cutaway to show a battery pack 100, which in this example is located in what would be the engine bay of an engine-powered aircraft. The battery pack 100 supplies electrical power to the windings of an electric motor via an inverter, and the rotor of the motor drives rotation of a shaft of a propeller 15.

**Figure 1B** illustrates a vertical take-off and landing (VTOL) aircraft 20 with a purely electric propulsion system. The VTOL aircraft 20 has a fuselage 21 that includes a cabin for occupants (e.g., five occupants), main wings 22, a rear flight surface 23, and a landing gear 24. The VTOL aircraft 20 further includes a distributed propulsion system that includes four front propulsors 25f that are coupled to the main wings 22, and two rear propulsors 25r that are coupled to the rear flight surface 23.

Each propulsor 25f, 25r has a propeller that is driven to rotate by a respective motor. The windings of the motors receive electrical power, via inverters, from a battery pack 100. The battery pack 100 is not visible in Figure 1B, but a possible location of a battery pack in the fuselage 21 is indicated by the dashed box 100. The battery pack 100 could, however, be located elsewhere (e.g., in the wings 22 or in a propulsor 25f, 25r) or there may be multiple battery packs located about the airframe. The propulsors 25f, 25r are tiltable between the illustrated VTOL configuration in which the propellers produce vertical thrust for take-off, landing and hover, and a flight configuration in which the propellers produce forward thrust for flight and possibly taxiing. In this example, the propulsors 25f, 25r tilt with the wings 22 and rear flight surface 23. In other examples, the propulsors are tiltable relative to the wings.

It is to be understood that the electric CTOL aircraft 10 and the electric VTOL aircraft 20 of Figures 1A-1B are only intended to be examples. Various other configurations are known, will occur to those skilled in the art and are in accordance with the present disclosure.

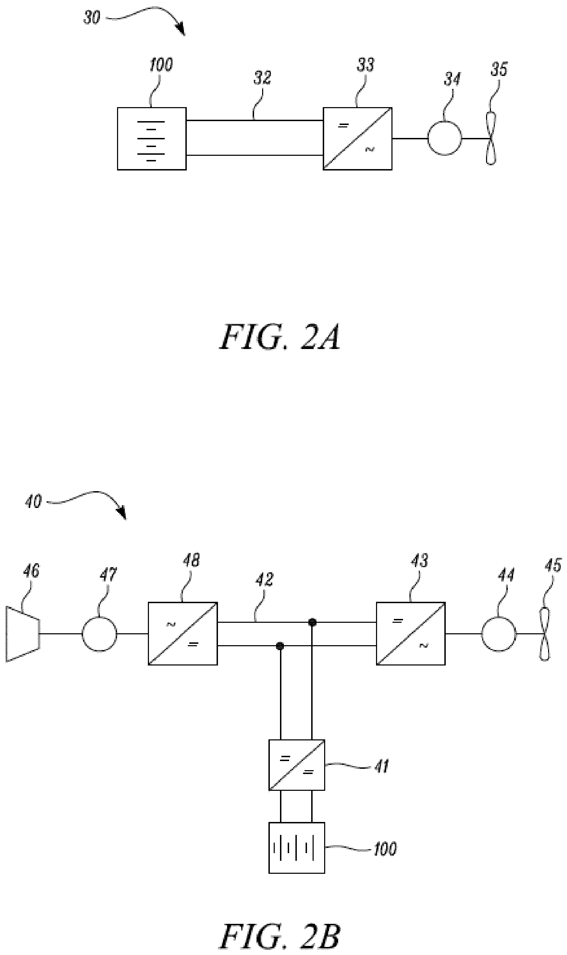

Figure 2A is a schematic illustration of a purely electric aircraft propulsion system 30. It includes a battery pack 100, which supplies power to a power channel 32, possibly via a DC:DC converter (not shown) to regulate the voltage on the power channel. A propeller 35 is driven to rotate by a motor 34, the windings of which draw electrical power from the power channel 32 via an inverter 33.

Figure 2B illustrates a propulsion system 40 of a hybrid electric aircraft. Like the electric aircraft propulsion system 30, the hybrid electric aircraft propulsion system 40 includes a battery pack 100 that supplies power to a power channel 42, in this case via a DC:DC converter 41 to regulate the voltage on the power channel 42. A propeller 45 is driven to rotate by a motor 44, the windings of which draw electrical power from the power channel 42 via an inverter 43. Additionally, the hybrid electric propulsion system 40 includes an engine 46 (e.g., a gas turbine engine), a shaft of which is coupled to and drives an electrical generator 47 which generates electrical power and supplies the power to the power channel 42 via a rectifier 48. The motor 44 is thus capable of being powered by both the engine 46 (via the generator) and the battery 100. The battery 100 can also be recharged by absorbing power that has been generated from the engine 46 from the power channel 42.

Those skilled in the art will recognize the hybrid electric propulsion system 40 of Figure 2B to be of the series hybrid type. Parallel hybrid electric systems, turboelectric systems and systems having features of more than one type are also known and in accordance with the present disclosure.

Those skilled in the art will also appreciate that the propulsion system architectures 30, 40 of Figures 2A-2B have been simplified to illustrate the general principles of electric and hybrid electric propulsion systems. Many variations are known and in accordance with the present disclosure. For example, the VTOL aircraft 20 of Figure 1B has a distributed propulsion system with six EPUs 25f, 25r having motors. In one example, each of the six propulsors 25f, 25r may be associated with an electric or hybrid electric sub-system similar the ones shown in Figures 2A-2B. In other examples, multiple (e.g., two) propulsors may share a common power channel. Further, various changes may be made to increase the fault tolerance and power availability in the systems. For example, the electrical machines 34, 44, 47 may have multiple independent sets of windings, and the electrical systems 30, 40 may be reconfigurable through the use of switches (e.g., contactors, solid state circuit breakers, or solid-state power controllers).

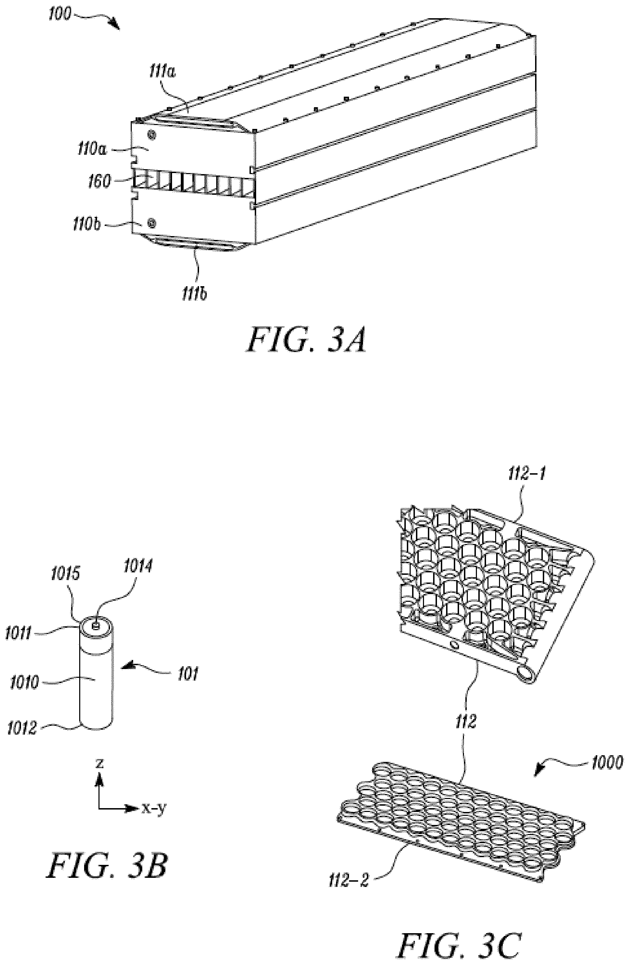

Figure 3A illustrates the outer structure of a battery pack 100 such as may be used in the aircraft 10, 20 and aircraft propulsion systems 30, 40 of Figures 1A-1B and 2A-2B.

The battery pack 100 includes a housing comprising first and second (upper and lower) housing portions 110a, 110b. Each of the housing portions 110a, 110b houses a large number (e.g., hundreds or thousands) of battery cells, for example cylindrical lithium-ion battery cells. In this example, each housing portion 110a, 110b has a removable lid 111a, 111b that allows access to an internal region in which the cells are located. In this way, cells can be added or removed from the pack 100 during assembly or maintenance. The two housing portions 110a, 110b are further shown to be separated by, and located on opposite sides of, a cooling channel 160 through which a coolant (e.g., a liquid coolant or a gaseous coolant such as air) may pass to the cool the cells. For example, heat produced by the cells of the pack 100 may be exchanged with the coolant flowing through the channel 160 via an internal surface of the channel.

Those skilled in the art will appreciate that the structure of the battery pack 100 is merely one example and is not intended to limit the scope of the present disclosure. For example, a battery pack may not include two housing portions 110a, 110b, and could instead include only one or more than two housing portions. Further, a battery pack 100 may take a different approach to cell cooling (e.g., direct cooling instead of indirect cooling, liquid cooling instead of air cooling, and/or cooling that makes use of phase change materials).

Figure 3B shows a single cylindrical battery cell 101. The cell 101 is in the form of a can having a cylindrical outer sidewall 1010 that extends in a z-direction, parallel to an axis of the cylinder, between a first side 1011 and a second side 1012. The cell has a positive terminal 1014 and a negative terminal 1015. In this example, the two terminals 1014, 1015 are located at the same, first, end 1011 of the cell. In this example, the positive terminal 1014 occupies a central region of the cell and the negative terminal 1015 occupies a radially outer region of the cell (e.g., the cell rim). In other cylindrical cells, the positive and negative terminals are located at axially opposite sides of the cell.

The internal structure of the cell 101, which typically includes a rolled up layered structure, will be familiar to those skilled in the art and will not be described further. As described previously, some cylindrical cells further include a vent for allowing the cell to expel gas, flames and other thermal products in a controlled manner. In some examples, the vent is configured to vent thermal products in the z-direction from one of its ends, for example the first end 1011. In accordance with the present disclosure, the cylindrical cell may be of any suitable type, including cells of the 4680, 4690, 18650, 21700 and 26650 types. In some examples, a battery pack may include cell of more than one type (e.g., 4680 cells and 21700 cells).

A battery pack 100 may include a carrier structure for locating the cells 101 relative to each other and to retain the cells 101 in a constant position. To this end, **Figure 3C** shows an exemplary carrier structure 112, which may be included within the housing (e.g., within a housing portion 110a or 110b) of the battery pack 100. In this example, the carrier structure 112 includes an upper portion 112-1 and a lower portion 112-2. Each of the carrier structure portions 112-1, 112-2 has an array 1000 of apertures, each aperture corresponding to one cell 101. In situ, the first end 1011 of a cell sits in an aperture of the upper portion 112-1 of the carrier structure 112 and the second end 1012 of the cell sits in an aperture of the lower portion 112-2 of the carrier structure 112. The apertures may include features, e.g., interference fit features, for retaining the cells within the apertures.

It will again be understood by those skilled in the art that the illustrated carrier structure 112 is merely one example and that other carrier structures are possible and in accordance with the present disclosure. For example, the carrier structure 112 may be an integral part of the housing of the battery pack 100, or the carrier structure 112 may include only one portion (e.g., only a lower portion 112-2).

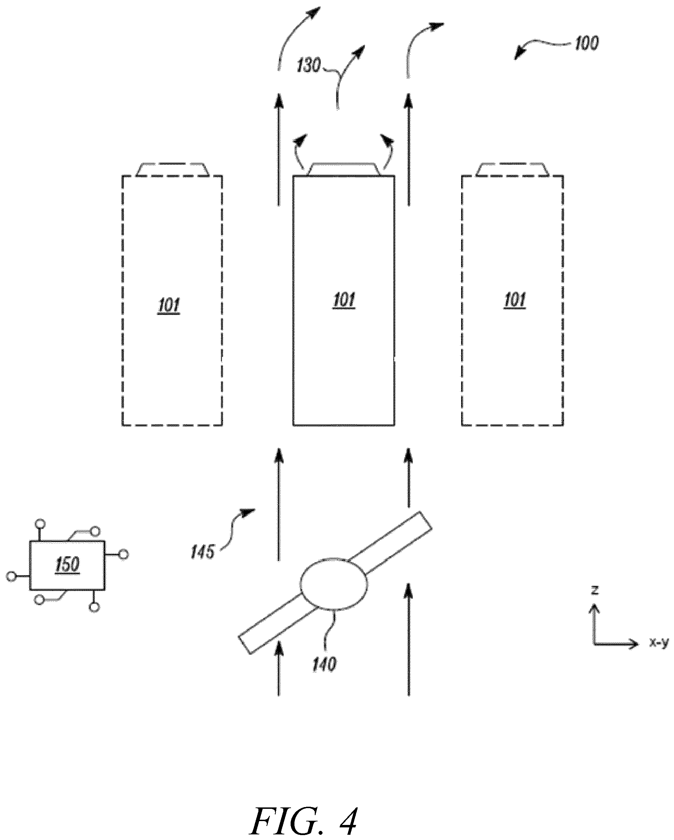

**Figure 4** illustrates a portion of a battery pack 100 in accordance with embodiments of the present disclosure. The battery pack 100 is shown in a partially schematic form in cross-section, with the x-y and z-directions indicated.

The battery pack 100 includes an array of battery cells 101. In the illustrated example each of the battery cells 101 is shown to be a cylindrical cell but could be another type of cell, for example a pouch cell or a prismatic cell. The cells 101 are arranged in the array in the x-y plane and extend in the z-direction perpendicular to the x-y plane. The battery pack further includes a flow control device 145 and sensing and control circuitry 150 that is configured to control the operation of the flow control device 150 based on one more sensed parameters.

In a cell failure event such a thermal runaway, the temperature of a cell increases, typically from about 150°C at the onset of thermal runaway to a maximum temperature of about 900°C. At some point prior to and/or during the event, the cells 101 may vent thermal products 130 (e.g., flames and gas) in a controlled manner (i.e., through a vent arrangement) or in an uncontrolled manner (e.g., SWR), resulting in a local and global pressure increase in the pack. The failure of one or more cells may be accompanied by a change (e.g., a drop or spike) in the voltage and current produced by the pack. In accordance with the present disclosure, the sensing and control circuitry 150 detects that one or more of the plurality of cells have started, or are at risk of starting, a failure event and responds by activating the flow control device 140. In doing so, the onset and/or propagation of the failure event may be prevented.

The flow control device 140 may be an active flow control device or a passive flow control device. Active flow control devices, for example fans and blowers, generate their own flow of fluid. For example, an active flow control device may be a fan that can be selectively driven by a motor to rotate to generate a flow. Passive flow control devices do not generate their own flow of fluid but are able to direct an existing flow. For example, a selectively openable port or hole may be actuated to allow an external flow from outside of the battery pack 100 to enter the battery pack. Such a flow may be an ambient flow due to motion of a vehicle (e.g., an aircraft) through the air or a separately driven flow, e.g., a pumped flow of cooling fluid associated with another vehicle component such a motor or power electronics converter.

The sensing and control circuitry 150 includes one or more sensors located within the battery pack 100 and operable to measure one or more parameters of the battery pack that are indicative of thermal runaway. For example, the sensing and control circuitry 150 may include one or more of the following:

- One or more temperature sensors operable to measure a temperature within the battery pack 100. In some embodiments, there is a temperature sensor for each cell in the array, located close to or affixed to the cell, to measure a temperature local to the cell. In other embodiments, there is one temperature for each group of cells, each group including multiple (e.g., two or three) cells, in which case a sensor may measure an approximate average temperature of the group.

- One or more pressure sensors operable to measure a pressure within the battery pack 100. In some embodiments, there may be only one or several pressure sensors operable to measure an overall pressure within the pack or within a region of the pack. In other embodiments, each cell or each group of cells (e.g., two or three cells) may have a dedicated temperature sensor to measure a pressure proximate the cell or group or cells to detect a localized pressure change.

- One or more voltage sensors and/or current sensors operable to measure a voltage or current developed by the cells of the battery pack. In some embodiments, each cell or each group of cells may have a dedicated voltage or current sensor to detect a local change (e.g., drop) in the voltage or current developed by a cell or group of cells. In other embodiments, there may be one or a few such voltage or current sensors to detect a change in the voltage or current developed by the entire pack or by a region of the pack (e.g., each module or sub-module that are connected to form a larger pack).

The sensing and control circuitry 150 further includes a controller that is configured to receive the measured parameter(s) from the sensors and to, based on the parameters, determine a condition to the effect that thermal runaway has occurred or is likely to occur. For example, the control circuitry may be configured to determine:

- A measured temperature within the pack (e.g., a temperature close to one cell or a group of cells) has increased above a threshold (e.g., above 100°C), has increased by at a least threshold amount (e.g., has risen by more than 50 Kelvin) or has increased at a rate higher than a threshold rate (e.g., at more than 20 Kelvin per minute). Values for the thresholds may depend on whether the temperature measurement is for the whole pack or is a localized temperature measurement.

- A measured pressure within the pack has increased above a threshold, has increased by at least a threshold amount, or has increased at a rate higher than a threshold rate. Values for the thresholds may depend on whether the pressure measurement is for the whole pack or is a localized pressure measurement.

- A measured voltage or current drops below a threshold, has decreased by at least a threshold amount, or has decreased at a rate higher than a threshold rate. Again, values for the thresholds may depend on whether the measurement is for the whole pack or is a localized measurement.

In response to determining that a cell failure event has occurred or is likely to occur, the control circuitry 150 is configured to activate the flow control device 140 in order to direct a flow of fluid 145 past one or more cells 101 of the array. The flow 145 has the effect of cooling the cell(s) 101, which may reduce the likelihood of the cell failure propagating or prevent an impending failure event from occurring. The flow 145 may also help carry thermal products 130 such as gas, which may have been released by the cell due to a controlled venting or SWR event, away from the cells to prevent of accumulation of thermal products and reduce the risk of ignition.

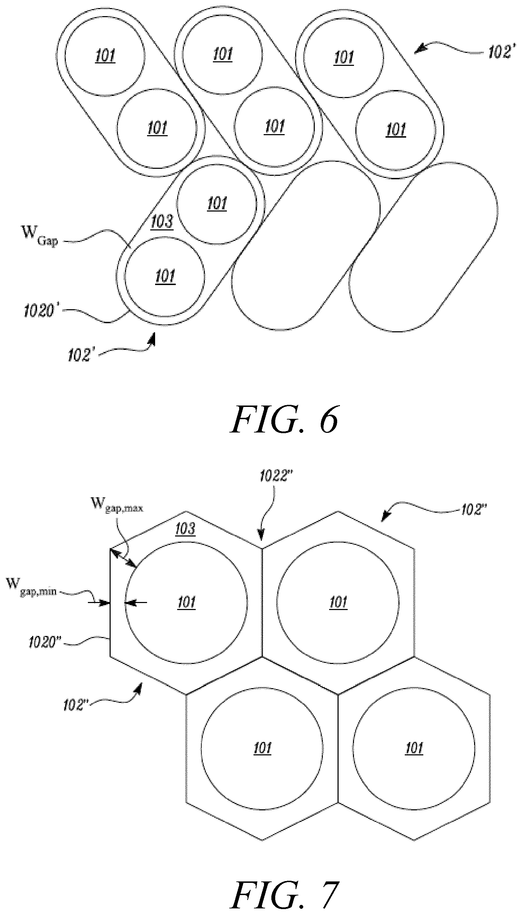

Figure 4 only shows one flow control device 140, and in accordance with some embodiments of the present disclosure there may be a single flow control device that serves the entire battery pack 100. In other embodiments, however, the battery pack 100 includes a plurality of flow control devices 140. For example, there may be a flow control device 140 for each and every cell 101 of the battery pack 100. In another embodiment, briefly referring to Figure 6, the battery pack 100 may divided into groups of cells (e.g., groups of two or three cells 101) and there may be a flow control device 140 for each group of cells. In still other embodiments, the battery pack 100 may be divided into modules, and a module may be divided into sub-modules, and each module or sub-module may have one or more dedicated flow control devices 140.

Where there is a plurality of flow control devices, the control circuitry 150 may activate all of the flow control devices 140 in response to any detection of a failure event onset, or the control circuitry 140 may selectively activate flow control devices 140 according to their proximity to a detected onset. For example, if an onset is detected amongst a group of cells 101, a flow control device 140 corresponding to the group of cells as well as flow control devices 140 of immediately adjacent groups of cells (e.g., nearest neighbours) may be activated.

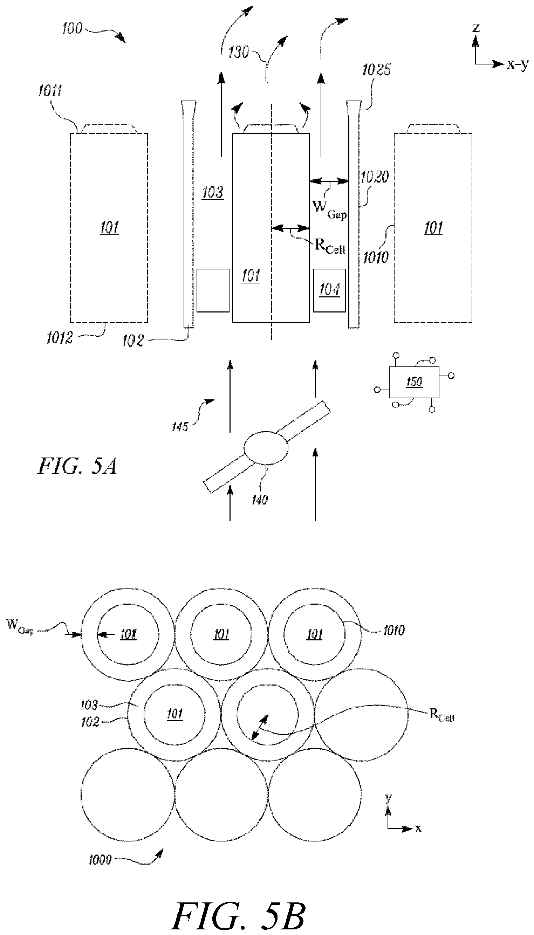

In some embodiments, the flow control devices 140 direct a flow of ambient air 145. In other embodiments, however, a different fluid having flame-retardant properties may be introduced into the battery pack and a flow of the fluid directed by the flow control devices 140. For example, the fluid may include water or another flame retardant liquid, an inert gas such as argon, or a flame retardant gas containing bromine, chlorine, phosphorous, nitrogen or boron, for example. Using a flame retardant fluid may reduce the risk of fire and explosion.
In the illustrated embodiment, the flow control device 140 directs the flow generally parallel to the z-direction, i.e., perpendicular to the plane of the array of cells 101. This may be advantageous in that it carries any vented product 130 away from the array. Further, the battery pack 100 may include one or more ducts or vent regions (e.g., defined in a housing) from which vented media may be expelled to prevent the build of pressure within the pack. The flow control device(s) 140 may be arranged to direct the flow 145 in the general direction of a duct or vent region of the battery pack 100.
Now turning to **Figures 5A-5B,** these illustrate an embodiment of the present disclosure in which the cells 101 of the array 1000 are surrounded by barriers 102 that help prevent the propagation of cell failure events to surrounding cells.
In this embodiment the cells are cylindrical cells. The cylindrical cells 101 have axes parallel to the z-direction and outer walls 1010 that extend in the z-direction between first and second opposed ends 1011, 1012. The array 1000, labelled in Figure 5B, is in the x-y direction perpendicular to the z-direction. The cells 101 may be located in their positions with the array 1000 by a carrier structure such as the structure 112 shown in Figure 3C, though any suitable carrier structure for locating the cells in an array 1000 of a desired form may be used.

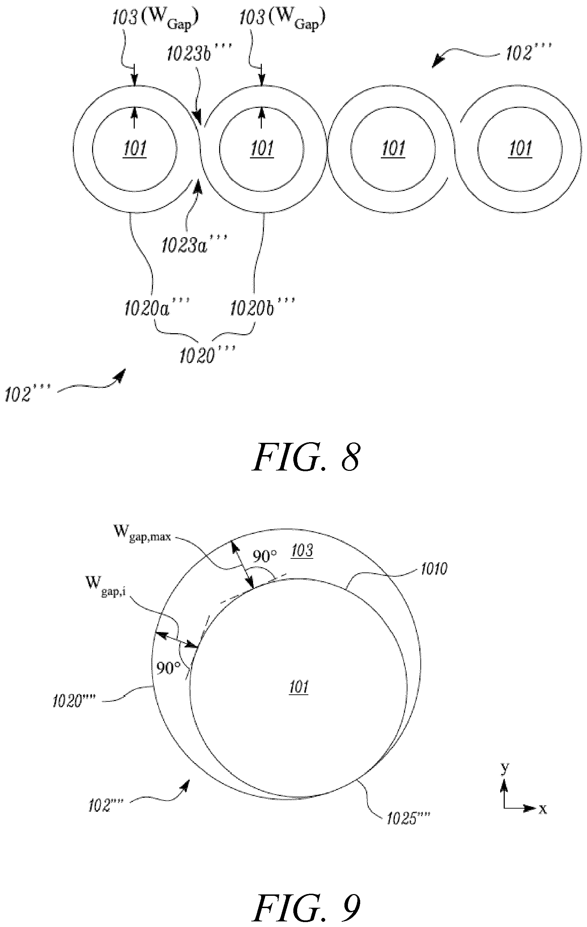

To reduce the likelihood of a cell failure event (e.g., thermal runaway) propagating from one cell 101 to adjacent cells of the pack 100, the battery pack 100 includes barriers 102. Each barrier 102 forms a wall 1020 which surrounds (e.g., encloses) groups of cells 101. In the embodiment of Figures 5A-5B, the barriers 102 completely surround the cells 101, i.e., there are no gaps in the barrier walls 1020. It is, however, contemplated that the barriers 102 may surround the groups of cells 101 but include one or more small gaps. Figure 8, described in more detail below, illustrates an embodiment in which a barrier wall includes gaps but still defines a generally enclosed volume that surround its cells.

The walls 1020 extend in the z-direction, in this case above and below the planes of the upper and lower ends 1011, 1012 of the cells 101 and completely surrounds the cells in the x-y direction. Extending the wall above the plane of the cell (i.e., at the end 1011) by between 1% and 30% of the length of the cell has been found to provide a chimney effect, which may reduce the likelihood of failure propagation. An extension of between 3% and 15% above the plane of the cell may be particularly advantageous. In other embodiments, the walls 1020 may terminate flush with the surface 1011, 1012. In still other embodiments, the walls 1020 terminate below the plane of the upper surface 1011 of the cells 101, for example the walls 1020 may extend 60-95% the length of the cells 101 in the z-direction.

In the present embodiment, each cell 101 is surrounded by its own barrier 102 (i.e., each group of cells 101 consists of precisely one cell 101). Figure 5A shows only one barrier 102, but it can be seen from Figure 5B that each cell 101 of the array 1000 is surrounded by a barrier 102. By providing each cell 101 of the array 1000 with its own barrier 102, the amount of energy that must be absorbed by the barrier 102 in a failure event (e.g., SWR) to prevent propagation is kept to a minimum. In the embodiment of Figure 5A, the barrier walls 1020 are generally tubular and have a circular cross-section, which provides a high degree of pressure containment. However, briefly referring to Figure 7, other cross-sections are possible, for example a hexagonal cross-section.

Of particular note is the presence of a gap 103 in the x-y direction defined between the outer cylindrical wall 1010 of the cell 101 and the inner surface of the wall 1020 of the barrier 102 that encloses the cell 101. The configuration and operation of the flow control devices 140 and sensing and control circuitry 150 are substantially the same as described above with reference to Figure 4. However, in the present embodiments, the gap 103 forms a channel through which the flow 145 directed by the flow control device 140 passes. The channel may improve the efficiency of the flow, both in terms of carrying away vented media 130 and removing heat from the cell 101.

It has also been found that the inclusion of a gap 103, and the selection of the size of the gap 103, has a surprisingly impact on the effectiveness of the barriers 102. The provision of a gap 103 of a well-selected size may then allow for a reduction in the thickness of the wall 1020 of the barrier 102, which usefully limits the cumulated mass of the barriers 102 of the battery pack 100 and may allow a more densely packed array 1000, increasing pack power density.

In more detail, according to some embodiments of the present disclosure, the size of the gap may satisfy the inequality:

$$0.02 \leq \frac{W_{Gap}}{R_{Cell}} \leq 0.20.$$

$W_{Gap}$ and $R_{Cell}$ are labelled in Figures 5A-5B. $R_{Cell}$ is the radius of the cylindrical cell 101, which is measured in the x-y direction perpendicular to the z-direction that is parallel to the cell axis. $W_{Gap}$ is the average size of the gap 103, again measured in the x-y plane. In the present embodiment in which each barrier 102 is tubular, surrounds a single cell 101, and is coaxial with the axis of the cell, the size of the gap 103 has the same size ($W_{Gap}$) wherever it is measured. In other embodiments, however, this is not the case. As explained in more detail below, where a barrier surrounds one cell, $W_{Gap}$ is defined as the average size of the gap. In other words, $W_{Gap}$ is the average perpendicular distance, measured in the x-y plane, between an outer wall 1010 of a cell 101 enclosed by the barrier 102 and an inner surface of the wall 1020 of the barrier 102. Where the barrier surrounds more than one cell (as in Figure 6), $W_{Gap}$ is defined as the distance of closest approach between the barrier wall and an enclosed cell.

Selecting $W_{Gap}$ so that the value of the ratio is between 0.02 and 0.20 has been found to balance competing effects and provide strong anti-propagation performance. For example, a value between 0.02 and 0.20 avoids the barrier wall 1020 behaving as additional cell can thickness, which could delay the onset and increase the burst pressure of a sidewall failure event, yet limits the volume of the region between the cell 101 and barrier 102 in which combustible gases can accumulate. A value between 0.03 and 0.15 may provide particularly good failure propagation performance, and a value of between 0.04 and 0.12 may also be preferred. In one group of embodiments in which the cells are 18650 cylindrical cells with a radius of 9 mm, $W_{Gap}$ may be between 0.2 mm and 1.7 mm, and in a specific example is about 0.40 mm. In another example the cells are 21000 cylindrical cells with a radius of 10.5 mm, $W_{Gap}$ may be between 0.30 mm and 2.10 mm, and in a specific example is about 0.50 mm.

The barrier walls 1020 are formed from a strong but lightweight material. In the present embodiment, they are formed from a glass-fibre reinforced plastic (GFRP). However, other materials (e.g., composite materials, thermoplastic materials or thermoset plastic materials) may be used. Some examples include carbon-fibre reinforced polymers (CFRPs), Kevlar and other aramids.

The thickness of the barrier walls 1020 may be varied according to the application requirements, for example the allowable mass of the barriers 102 and the desired level of anti-propagation protection. In some embodiments, the barrier walls 1020 are between 0.3 mm and 3 mm thick, for example 0.7 mm. Where a composite material is used, the wall thickness may be adjusted by varying the number of composite layers used to form the wall. It has been found that if $W_{Gap}$ is selected so that the ratio of $W_{Gap}$ and $R_{Cell}$ is between 0.02 and 0.20, two to four layers provides a good level of anti-propagation protection, while additional layers beyond four may only provide a modest improvement yet increase the mass of pack 100. In some embodiments, two layers or four layers are used. Barriers having two layers have been found to prevent propagation of failure events while adding minimal mass, but such barriers are degraded following an event. Four layers has been found to both prevent propagation and have limited degradation while adding some mass to the battery pack 100.

In the present embodiment, some or all of the barriers 102 further include flow guide features 1025 configured to guide a flow of media 130 in a preferred direction. For example, some or all of the barriers 102 may include a profiled wall section or edge, a vane, a fin, or a rib that guides a flow of media 130 passing the flow guide feature 1025 in a preferred direction. The preferred direction may depend on the design of the battery pack 100 and/or the location of the cell in the array 1000. Some battery packs 100 may include one or more ducts or vent regions from which vented media may be expelled to prevent the build of pressure within the pack. In this case, the flow guide features 1025 may be configured to direct the flow of media 130 towards a duct. As another example, failure events may be less likely to propagate to cells 101 located at the edge of the array 1000 (i.e., cells not totally surrounded by other cells) as these cells are in less thermally demanding environments than cells located at the centre of the array. The flow guide features 1025 may therefore be configured guide the flow of hot media away from the centre and towards to the edges of the array 1000.

The flow guide feature 1025 may be located at an end of the barrier 102 that, when the pack is assembled and used, forms a top end of the barrier 102 with respect to gravity (e.g., proximate to the first ends 1011 of the cells 101). Following a thermal runaway event that results in the venting of media, whether through a venting arrangement or SWR, heat will tend to cause the media 130 to rise vertically upward. Thus, the vented media 130 will rise and pass the flow guide feature 1025 and be directed, as illustrated in Figure 5A.

In some of the embodiments described herein, the barriers 102 are separate from but attachable to the structure (e.g., the carrier structure 112) of the battery pack 100. This not only allows the barriers 102 to be formed from a different material from other structures of the pack, but it allows the barriers to be individually replaced should one on more cells fail resulting in damage to the barriers. To this end, the battery pack 100 may include structural connection features 104 for connecting the barriers 102 to another pack structure (e.g., a carrier structure 112). In some examples, the structural connection features 104 take the form of cooperating mating features in the barriers 102 and carrier structure 112 (e.g., slots in the barrier 102 and projections in the carrier structure 112). In other examples, including Figure 5A, the structural connection features 104 may be a separate component, such a clip or other suitable fastener, that couples to the barrier 102 and to a location of the battery pack (e.g., the carrier structure 112). Using a separate structural connection feature may allow for the use of a smaller, lighter carrier structure.

Figures 6-9 illustrate further embodiments of the present disclosure, and in particular different anti-propagation barriers 102. It is noted that the flow control device(s) 140 are not shown in the top-down views of Figure 6-9. However, those skilled in the art will appreciate that the flow control devices 140 may be implemented in substantially the same way as described above.

**Figure 6** illustrates another embodiment of the invention in which the barrier walls 102' each enclose a group of two cylindrical battery cells 101. Increasing the number of cells 101 within a group reduces the cumulated mass of the barriers 102 of the pack because fewer barriers are required. This may, however, come at the cost of allowing failure propagation within a group and increasing the amount of energy the barriers 102 must absorb to prevent propagation to adjacent groups. According to the present disclosure, the size of each group may be limited to one, two or three cells. Two cells may strike a good balance between the competing effects.

In the present embodiment, the barrier wall 1020' has a pill-shaped or oblong cross-section. As in the previous embodiment, there is a gap 103 defined between the outer cylindrical walls 1010 of the enclosed two cells 101 and the inner surface of the wall 1020' of the barrier 102' that encloses the two cells 101. Unlike the previous embodiment, however, the size of the gap 103 varies due to the presence of two cells in the group and the cross-section of the barrier wall 1020'. $W_{Gap}$, which is indicated in Figure 6, is defined as the smallest size of the gap 103 (i.e., the distance of closest approach, measured in the x-y plane, between an outer wall 1010 of a cell 101 enclosed by the barrier 102' and an inner surface of the wall 1020' of the barrier 102'). As before, the ratio of $W_{Gap}$ and $R_{Cell}$ may be in the range 0.02 to 0.20.

**Figure 7** illustrates yet another embodiment of the invention in which each barrier wall 102" encloses a single cylindrical battery cell 101 and has a hexagonal cross-section. Further, the cells 101 and the barriers 102" of the array 1000 are arranged so that the barrier walls 1020" tessellate (i.e., the barrier walls 1020" fit together without gaps between adjacent walls).

Taking this approach, the walls of adjacent barriers 102" meet to form a region of double wall thickness, indicated by the arrow 1022" in Figure 7. This may allow each barrier wall 1020" to be made thinner (e.g., a wall of half thickness compared to those of Figures 5A-5B), reducing the cumulated mass of the barriers 102" without a significant drop in anti-propagation performance. Further, it may allow heat to be more efficiently spread between a large number of barriers 102" by thermal conduction. This may effectively increase the thermal mass of each barrier 102" and thus limit a temperature rise in the barriers 102" following a thermal event. This may in turn reduce the likelihood of propagation to other cells.

As in the previous embodiments, there is a gap 103 defined between the outer wall 1010 of each cell and the inner surface of the barrier wall 1020" that encloses the cell. Unlike the embodiments of Figures 5A-5B, the barrier wall 1020" does not have a circular cross-section and so the size of the gap varies about the circumference of the cell 101, ranging from the smallest perpendicular distance, $W_{Gap,min}$, to the largest perpendicular distance, $W_{Gap,max}$. Since the barriers of Figure 7 surround a single cell, the gap size, $W_{Gap}$, is defined as the average perpendicular distance between the outer wall 10101 of the cell 101 enclosed by the barrier wall 1020" and the inner surface of the barrier wall 1020". Thus, $W_{Gap}$ has a value greater than $W_{Gap,min}$ but less than $W_{Gap,max}$.

In other examples in accordance with the present disclosure, the walls 1020" may have a different tessellating cross-section, for example a triangular, square, pentagonal, or other tessellating polygonal cross-section. Each tessellating barrier 1020" could also enclose a group of more than one (e.g., two or three) cells.

**Figure 8** shows another embodiment in which the barrier wall 1020‴ of each barrier 102‴ surrounds two cells 101 and the wall 1020‴ of each barrier is not completely closed. Specifically, the two ends of barrier wall do not connect or join with each other and instead terminate to leave gaps 1023a‴, 1023b‴ in the wall 1020‴.

By utilising the gaps 1023a‴, 1023b‴, although each barrier 102‴ surrounds more than one cell 101, each cell 101 is surrounded by its own barrier wall portion 1020a‴, 1020b‴. In this way, it possible to obtain some of the advantages of each of the previous embodiments, shown in Figures 5A-5B, 6 and 7. For example, each cell 101 is surrounded by its own barrier wall (in this case a wall portion 1020a‴, 1020a‴ of the wall 1020‴), which may prevent a failure readily propagating to another cell of the group, as may happen in the embodiment of Figure 6. However, like the embodiment of Figure 6, the total number of barriers 102‴ in the battery pack 100 is reduced (halved, since each barrier 102‴ surrounds two cells), which improves the ease of assembly and reduces total number of parts. Further, as in the embodiments of Figures 6 and 7, the thermal mass of the barrier 102‴ is increased compared with the embodiment of Figures 5A-5B, which may limit the temperature rise of the barrier 102‴ following a failure event in one of the cells its surrounds.

As in the other embodiments, there is a gap 103 defined between the outer surface of the cells 101 and the inner surface of the barrier wall 1020‴ that encloses the cells. $W_{Gap}$ is labelled. Either the average or distance of closest approach may be used because the barrier wall may either be considered a single barrier 1020‴ wall enclosing two cells 101 or two barrier walls 1020a‴, 1020b‴ enclosing once cell each. It can be seen that the average distance and the distance of closest approach in the present embodiment will be approximately equal.

**Figure 9** illustrates a further embodiment of an anti-propagation barrier 102‴ in which the barrier wall 1020‴ surrounds a single cell 101. In this embodiment, the cell 101 is not centred with the respect to the barrier wall 1020‴. This results in a gap 103 whose size varies continuously about the circumference of the cell 101. In the context of a cylindrical barrier wall such as the one illustrated in Figure 9, it may be said that the axis of the cylindrical cell 101 is not coaxial with a central axis of the barrier.

In this example, the outer wall 1010 of the cell 101 contacts the barrier wall at a point 1025‴. The size of the gap 103 (i.e., the perpendicular distance between the outer wall 1010 of the cell 101 and the inner surface of the barrier wall 1020‴) therefore increases from zero at the contact point 1025‴ to a maximum value $W_{Gap,max}$ at a point diametrically opposite point 1025‴ on the circumference of the cell 101. Recalling that, for a barrier wall that surrounds a single cell, the gap size, $W_{Gap}$, is defined as the average perpendicular distance, the value of $W_{Gap}$ will be between zero and $W_{Gap,max}$. In accordance with the present disclosure, the value of $W_{Gap}$ may advantageously be in the range 0.02 to 0.20 times the radius of the cell, $R_{cell}$.

Figure 9 illustrates how the average perpendicular distance, $W_{Gap}$, may be calculated. For each of a large number of points about the circumference of the outer cell wall 1010, a line that is tangent to the point and in the x-y plane can be defined. Two such tangent lines are shown with dotted lines in Figure 9. The distance between the point and the barrier wall 1020‴, in a direction perpendicular to the tangent, is then determined. Two such distances, $W_{Gap,i}$ and $W_{Gap,max}$, are shown. This is repeated for a large number of points about the circumference of the circle and the average distance is $W_{Gap}$.

Embodiments in which the cell 101 is not centred with respect to the barrier wall 1020‴ may not be preferred due to the asymmetry such an arrangement creates. However, the presence of the barrier wall 102‴ and gap 103 may still provide good anti-propagation performance. Even where there is contact between the barrier wall and cell outer wall (point 1025‴), such limited contact may not have the negative effect of adding to the effective cell can thickness.

Various examples have been described, each of which feature various combinations of features. It will be appreciated by those skilled in the art that, except where clearly mutually exclusive, any of the features may be employed separately or in combination with any other features.

Further, while the invention has been described with reference to aircraft and aircraft propulsion systems, it will be appreciated that the battery packs of the present invention may be used in other applications. This includes other transport applications (e.g., cars, trucks, trains and the like), applications in consumer products, and stationary industrial applications.

## Claims

1. A battery pack (100), comprising:

    a plurality of battery cells (101);
    one or more flow control devices (140); and
    sensing and control circuitry (150) configured to:

       measure one or more parameters indicative of an onset of thermal runaway of one or more of the plurality of cells;
       determine, based on a change in one or more of the measured parameters, that one or more of the plurality of battery cells has begun or is at risk of beginning thermal runaway; and
       activate one or more of the flow control devices in response to the determination,

    wherein each of the one more flow control devices (140) is configured to, when activated, direct a flow of fluid (145) past one or more of the plurality of cells to cool the cells and/or carry media (130) vented by one or more of the cells following a thermal runaway event away from the one or more cells.

2. The battery pack (100) of claim 1, wherein the flow of fluid (145) is a flow of a flame retardant fluid.

3. The battery pack (100) of claim 1 or claim 2, wherein one or more of the flow control devices (140) are active flow control devices configured to generate a flow of fluid.

4. The battery pack (100) of any one of the preceding claims, wherein one or more of the flow control devices (140) are passive flow control devices configured, when activated, to direct an existing flow of fluid past the one or more cells.

5. The battery pack (100) of any one of the preceding claims, comprising a plurality of the flow control devices (140), each respective one of the plurality of flow control devices being selectively activatable by the sensing and control circuitry (150) and being configured to direct a flow of fluid (145) past a respective one or more groups of battery cells, each of the one or more groups of battery cells including one or more of the plurality of battery cells (101).

6. The battery pack (100) of any one of the preceding claims, wherein the sensing and control circuitry (150) includes one or more of:

    a temperature sensor configured to measure a temperature within the battery pack;
    a pressure sensor configured to measure a pressure within the battery pack;
    a current or voltage sensor configured to measure a current or voltage produced by the plurality of battery cells (101).

7. The battery pack (100) of any one of the preceding claims, wherein:

    each battery cell (101) extends in a z-direction, and the plurality of battery cells (101) are arranged in an array (1000) in an x-y plane perpendicular to the z-direction;
    the battery pack further comprises a plurality of barriers (102) for preventing propagation of thermal runaway between cells of the array, each barrier forming a barrier wall (1020) that extends in the z-direction,
    a gap (103) is defined between the barrier wall of each respective barrier and the outer cell walls (1010); and
    each of the one or more flow control devices (140) is configured to direct a flow of fluid (145) in the z-direction through one or more of the gaps (103).

8. The battery pack (100) of claim 7, wherein at least one of the plurality of barriers (102, 102', 102", 102''') further includes a flow guide feature (1025) configured to guide a direction of the flow of fluid (145) and/or a flow of media (130) vented by one or more of the cells (101) following a thermal runaway event.

9. The battery pack (100) of claim 7 or claim 8, wherein:

    the battery cells (101) are cylindrical battery cells, each cell having a cylindrical outer cell wall (1010) that extends in the z-direction between opposed first and second ends (1011, 1012) of the cell;
    each one of the plurality of barriers forms a barrier wall that surrounds a group of one or more of the cells; and
    a gap (103) is defined between the barrier wall of each respective barrier and the outer cell wall (1010) of each of the respective one or more cylindrical cells enclosed by the respective barrier.

10. The battery pack (100) of claim 9, wherein the barrier wall of each barrier surrounds one of the cells; a radius of each cylindrical cell (101), measured in the x-y plane, is equal to $R_{Cell}$; a size of the gap (103), defined as an average perpendicular distance, measured in the x-y plane, between the outer cell wall and the barrier wall, is equal to $W_{Gap}$; and a ratio of $W_{Gap}$ and $R_{Cell}$ satisfies:

$$0.02 \leq \frac{W_{Gap}}{R_{Cell}} \leq 0.20.$$

11. The battery pack (100) of claim 9, wherein: the barrier wall of each barrier surrounds more than one of the cells; a radius of each cylindrical cell, measured in the x-y plane, is equal to $R_{Cell}$; a size of the gap, defined as a distance of closest approach between the barrier wall and an outer wall of a cell enclosed by the barrier wall, measured in the x-y plane, is equal to $W_{Gap}$; a ratio of $W_{Gap}$ and $R_{Cell}$ satisfies:

$$0.02 \leq \frac{W_{Gap}}{R_{Cell}} \leq 0.20.$$

12. The battery pack (100) of any one of claims 7 to 11, wherein the barrier wall (1020, 1020', 1020", 1020''') of each one of the plurality of barriers (102, 102', 102", 102''') surrounds a group of one, two or three cells (101).

13. The battery pack (100) of any one of claims 7 to 12, wherein a thickness of the barrier walls (1020, 1020', 1020", 1020''') is less than or equal to 3 mm.

14. An aircraft propulsion system (30, 40) comprising the battery pack (100) of any one of the preceding claims.

15. An aircraft (10, 20) comprising:

the battery pack (100) of any one of claims 1 to 13; or
the aircraft propulsion system (30, 40) of claim 14.

FIG. 1A

FIG. 1B

FIG. 2A

FIG. 2B

FIG. 3A

FIG. 3B

FIG. 3C

FIG. 4

FIG. 5A

FIG. 5B

FIG. 6

FIG. 7

*FIG. 8*

*FIG. 9*